(19) Europäisches Patentamt
European Patent Office
Office européen des brevets

(11) **EP 2 629 443 A1**

(12) **EUROPEAN PATENT APPLICATION**

(43) Date of publication:
**21.08.2013 Bulletin 2013/34**

(51) Int Cl.:
***H04L 1/00*** *(2006.01)*

(21) Application number: **12305188.0**

(22) Date of filing: **20.02.2012**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicants:
• **Alcatel Lucent**
  **75007 Paris (FR)**
• **Politecnico di Milano**
  **20133 Milano (IT)**

(72) Inventors:
• **Bellini, Sandro**
  **20900 Monza (MB) (IT)**

• **Costantini, Carlo**
  **23880 Casatenovo (LC) (IT)**
• **Rinaldi, Sonia**
  **23030 Lovero (SO) (IT)**
• **Ferrari, Marco**
  **20139 Milano (IT)**
• **Tomasoni, Alessandro**
  **20855 Lesmo MB (IT)**
• **Spalvieri, Amaldo**
  **20129 Milan (IT)**

(74) Representative: **Colombo, Stefano Paolo et al**
**MARCHI & PARTNERS S.r.l.**
**Via G.B. Pirelli, 19**
**20124 Milano (IT)**

(54) **Encoding/decoding of digital data over an optical transmission channel**

(57)    It is disclosed a method of encoding a binary data stream for transmission over an optical transmission channel employing a digital modulation scheme using a number K of different phases. The method comprises: converting the binary data stream into a sequence of logic symbols represented by respective values out of a set of K integer values; splitting the sequence of logic symbols into a first subsequence of first logic symbols and a second subsequence of second logic symbols; differentially encoding the first logic symbols to derive differentially encoded logic symbols; applying a forward error correction code to the second logic symbols to derive adjacent blocks of symbols comprising a number m of FEC encoded logic symbols; and generating a stream of encoded logic symbols by combining each of the m FEC encoded logic symbols of one block and a respective one of the differentially encoded logic symbols.

Fig. 2

**Description**

**Technical field**

The present invention generally relates to the field of optical communication networks. In particular, the present invention relates to a method and an apparatus for encoding and to a method and an apparatus for decoding digital data over an optical transmission channel in an optical communication network.

**Background** art

In an optical communication network, digital data are usually carried over an optical transmission channel by an optical signal with modulated amplitude and/or phase. In particular, known digital modulation schemes involving the phase comprise phase shift keying (PSK) modulations, such as quadrature phase shift keying (QPSK) modulation, and quadrature amplitude (QAM) modulations. In PSK modulation schemes, the digital data modulate only the phase of the optical signal, while in QAM modulation schemes the digital data modulate both the amplitude and the phase of the optical signal.

Each of the modulation schemes cited above uses a finite number M of phases to represent the digital data. Each phase within each scheme typically encodes a unique pattern of $\log_2(M)$ bits representing an integer number ranging between 0 and M-1 or "logic symbol". For instance, binary phase shift keying (BPSK) modulation uses two phases, separated by 180o, each of which represents one bit, either a "0" or a "1". Quadrature phase shift keying (QPSK) uses four phases, separated by 90o, each of which represents a unique pair of bits, i.e. one of the pairs "00", "01 ", "10" and "11". In QAM modulation schemes, two carrier waves are amplitude modulated, the waves being are out of phase by 90o. The modulated optical signal then results from the summing of the two waves.

The symbols to be transmitted according to a digital phase modulation scheme are typically mapped into points of a two-dimensional diagram known as constellation diagram. Each point has a corresponding amplitude and a corresponding phase. Such combinations of amplitudes and phases will be referred to in the following as "modulated symbols". For PSK modulation schemes, the points are uniformly positioned on a unitary radius circle, i.e. the amplitude is kept constant while the phase varies by multiples of a given angle. For instance, for a generic M-PSK modulation scheme, the phase of the constellation points varies by multiples of 360o/M. For BPSK modulation, the angular spacing between the points of the constellation diagram is 180o, while for QPSK modulation the angular spacing is 90o. For QAM modulation schemes, the constellation points are typically arranged in a square grid with equal vertical and horizontal spacing.

Known coherent receivers receive the modulated optical signal, estimate its phase and decide the transmitted symbol. Decision may be implemented by a so-called "hard decision scheme", according to which it is decided for the symbol associated to the constellation point whose phase is closest to the estimated one.

Optical signals carried over optical transmission channels may be affected by phase ambiguity. In particular, the phase of the optical signal may be incorrectly estimated at the receiver as it may be mismatched by a multiple of the angular spacing between the points of the constellation diagram. As a result, decided symbols at the receiver are erroneously rotated by this angle, until an opposite rotation occurs. This effect is known as "phase slip". For instance, in case of BPSK modulation, when a phase slip occurs, the estimated phase of all the symbols, i.e. the bits, received after the phase slip is reversed with respect to the phase of the bits actually transmitted and all the bits recovered at the receiver appears to be incorrect, until a new phase slip occurs. In general, for an M-PSK modulation scheme, the estimated phase at the receiver may be mismatched by any multiple of 360o/M. For QAM schemes, the estimated symbols at the receiver could be erroneously rotated by multiples of 90o.

It is known to face the problem of phase slips occurring on optical channels by using differential encoding/ decoding prior to modulation. Assuming that $x_i$ is a symbol to be transmitted over the optical transmission channel (i.e. for an M-PSK modulation scheme an integer number ranging between 0 to M-1 representing the phase of the signal), differential encoding provides for encoding the symbol $x_i$ into symbol $y_i$ according to the following rule:

$$y_i = y_{i-1} + x_i \qquad\qquad [1]$$

wherein symbol "+" indicates a modulo-M addition (e.g. a modulo-2 addition if symbols are binary). Therefore, the symbol $y_i$ actually transmitted over the optical transmission channel results from the addition of original symbol $x_i$ and the symbol $y_{i-1}$ previously transmitted. The phase of the optical signal is then modulated by the stream of symbols $y_i$.

At the receiving side, the received symbols $y_i$ are demodulated and then they are differentially decoded to recover original symbols $x_i$ according to the following rule:

$$x_i = y_i - y_{i-1} \qquad\qquad [2]$$

wherein symbol "-" indicates a modulo-M subtraction, so that decoded symbol $x_i$ depends only on the difference between symbols $y_i$ and $y_{i-1}$. Therefore, decoded symbols $x_i$ are not related to the absolute phase of the optical signal but they are related to the phase difference between one received symbol $y_i$ and the previous one $y_{i-1}$.

**Summary of the invention**

Differential encoding is a known countermeasure for facing the effects of phase slips over an optical transmission channel. Indeed, since the original digital data are recovered at the receiver by taking the phase difference between one received symbol and the previous one, if the received symbols, due to a phase slip occurred over the channel, are inverted, the recovered data are nevertheless correct. Therefore, the digital data, through differential encoding/decoding, appear to be unaffected by phase slips occurring over the optical transmission channel.

However, differential encoding/decoding has the following drawback. If one symbol $y_i$ is incorrectly demodulated (because an error occurred e.g. due to noise on the optical channel), two adjacent decoded symbols, namely $x_i = y_i - y_{i-1}$ and $x_{i+1} = y_{i+1} - y_i$ would be incorrect. Therefore, one error in a received differentially encoded symbol results in two errors in the differentially decoded symbols.

As explained above, disadvantageously, the Bit Error Rate (BER) affecting a sequence of symbols after differential decoding can be expressed as $2p(1 - p)$, where p is the BER of the sequence of received symbols, i.e. the number of bit errors achieved over the optical transmission channel. Therefore, the BER significantly increases at Signal to Noise Ratios (SNRs) for which errors rarely occur in consecutive symbols. In other words, differential encoding/decoding implies that, for achieving a given BER over the optical transmission channel, a higher SNR is required (this situation is typically referred to as "SNR penalty").

In view of the above, the inventors have addressed the problem of providing a method and an apparatus for encoding/decoding the digital data to be transmitted over an optical transmission channel which overcomes the aforesaid drawback.

In particular, the inventors have addressed the problem of providing a method and an apparatus for encoding and a method and an apparatus for decoding the digital data to be transmitted over an optical transmission channel which allows data to be minimally affected by possible phase slips occurring over the channel and which, in the meanwhile, allows to reduce possible SNR penalties.

According to a first aspect, the present invention provides a method for encoding a binary data stream for transmission of the data over an optical transmission channel employing a digital modulation scheme using a number K of different phases, the method comprising:

a) converting the binary data stream into a sequence of logic symbols, the logic symbols being represented by respective values out of a set of K integer values;

b) splitting the sequence of logic symbols into a first subsequence of first logic symbols and a second subsequence of second logic symbols;

c) differentially encoding the first logic symbols to derive differentially encoded logic symbols;

d) applying a forward error correction code to the second logic symbols to derive adjacent blocks of symbols comprising a number m of FEC encoded logic symbols; and

e) generating a stream of encoded logic symbols by combining each of the m FEC encoded logic symbols of one of the blocks of symbols and a respective one of the differentially encoded logic symbols.

Preferably, at step e) combining comprises performing a modulo-K addition of the each of the m FEC encoded logic symbols and the respective one of the differentially encoded logic symbols.

Preferably, the error correction code applied at step d) to the second logic symbols is a linear systematic block code.

More preferably, the error correction code is an LDPC (Low Density Parity Check) code.

Preferably, the method for encoding further comprises, before step a), applying to the binary data stream an outer forward error correction code.

Preferably, at step a) converting comprises associating groups of $\log_2(K)$ bits of the binary data stream to respective values of the logic symbols by means of a lookup table.

According to a second aspect, the present invention provides a method for decoding a stream of encoded logic symbols, the method comprising:

a') applying a forward error correction decoding algorithm to the stream of encoded logic symbols to derive a block of a number m+1 of FEC decoded logic symbols ;

b') recovering, from the block of FEC decoded logic symbols, one first FEC decoded logic symbol and a respective block of a number m of second FEC decoded logic symbols;

c') differentially decoding the first FEC decoded logic symbol to derive a first logic symbol;

d') processing the block of second FEC decoded logic symbols for extracting second logic symbols; and

e') concatenating the first logic symbol and the second logic symbols into a single sequence of logic symbols and converting the logic symbols into binary data.

Profitably, at said step a') the forward error correction decoding algorithm is a soft iterative decoding algorithm.

Preferably, at step b') recovering comprises performing a modulo-K subtraction of the first FEC decoded logic symbol from the block of FEC decoded logic symbols.

Preferably, at step d') processing comprises eliminating parity-check symbols from the second FEC decoded logic symbols.

According to a third aspect, the present invention provides an encoding unit for a transmitter of a node of an optical communication network, the encoding unit comprising:

- a mapper which converts a binary data stream into a sequence of logic symbols, the logic symbols being represented by respective values out of a set of K integer values;
- a demultiplexer which splits the sequence of logic symbols into a first subsequence of fist logic symbols and a second subsequence of second logic symbols;
- a differential encoder which differentially encodes the first logic symbols to derive differentially encoded logic symbols;
- a FEC encoder which applies a forward error correction code to the second logic symbols to derive adjacent blocks of symbols comprising a number m of FEC encoded logic symbols; and
- an encoding module which generates a stream of encoded logic symbols by combining each of the m FEC encoded logic symbols of one of the blocks of symbols and a respective one of the differentially encoded logic symbols.

Preferably, the encoding module comprises a number m of adders each configured to perform a modulo-K addition of each of the m FEC encoded logic symbols to the respective one of the differentially encoded logic symbols.

According to a fourth aspect, the present invention provides a node for an optical communication network, the node comprising a transmitter comprising an encoding unit as set forth above and a modulator, wherein the modulator is configured to map encoded logic symbols into corresponding modulated symbols of a digital modulation scheme, and to associate the modulated symbols to a number K of different phases of an optical carrier signal so as to generate a modulated optical signal, and wherein the node is configured to transmit the modulated optical signal over an optical transmission channel.

Preferably, the transmitter further comprises an outer encoding unit which is configured to apply an outer forward error correction code to the binary data stream.

According to a fifth aspect, the present invention provides a decoding unit for a receiver of a node of an optical communication network, the decoding unit comprising:

- a FEC decoder which applies a forward error correction decoding algorithm to a stream of encoded logic symbols to derive a block of a number m+1 of FEC decoded logic symbols;
- a decoding module which recovers, from the block of FEC decoded logic symbols, one first FEC decoded logic symbol and a respective block of a number m of second FEC decoded logic symbols;
- a differential decoder which differentially decodes the first FEC decoded logic symbol to derive a first logic symbol; and
- an information extraction module which processes the block of m second FEC decoded logic symbols for extracting second logic symbols;
- a multiplexer which concatenates the first logic symbols and the second logic symbols into a single sequence of logic symbols; and
- a de-mapper which converts the logic symbols into binary data.

Preferably, the decoding module is further configured to perform a modulo-K subtraction of the one first FEC decoded logic symbol from the block of FEC decoded logic symbols.

According to a sixth aspect, the present invention provides a node for an optical communication network, the node comprising a receiver comprising a demodulator and a decoding unit, the receiver being configured to receive an optical signal, the received optical signal having a number K of different phases associated to modulated symbols of a digital modulation scheme, wherein the demodulator is configured to de-map the modulated symbols into corresponding encoded logic symbols, and wherein the decoding unit is as set forth above.

The skilled person will appreciate that the method for encoding and the method for decoding as set forth above are linked by a same concept of coding data for transmission over an optical channel. Indeed, the operations performed by implementing the method for decoding are substantially the inverse ones of the operations performed by implementing the method for encoding.

**Brief description of the drawings**

Embodiments of the invention will be better understood by reading the following detailed description, given by way of example and not of limitation, to be read with reference to the accompanying drawings, wherein:

- Figure 1 is a schematic block diagram of a communication system according to embodiments of the present invention;
- Figure 2 is a schematic block diagram of an encoding unit comprised in the transmitter of Figure 1;
- Figure 3 shows matrix $A_x$ for the computation of the generator matrix of an equivalent error correction code applied at the encoding unit of Figure 2;
- Figure 4 is a schematic block diagram of a decoding unit comprised in the receiver of Figure 1;
- Figures 5a, 5b and 5c show encoded symbols within the encoding unit of Figure 2;
- Figures 6a, 6b and 6c show decoded symbols within the decoding unit of Figure 4 when a phase slip affecting entire n-tuples of received symbols occurs;
- Figures 7a, 7b and 7c show decoded symbols within the decoding unit of Figure 4 when a phase slip occurred inside an n-tuple of received symbols;
- Figures 8a and 8b shows performance graphs related to the method implemented according to the present invention; and
- Figures 9a and 9b show two examples of different possible mappings of encoded symbols onto 16-QAM modulated symbols.

**Detailed description of preferred embodiments of the invention**

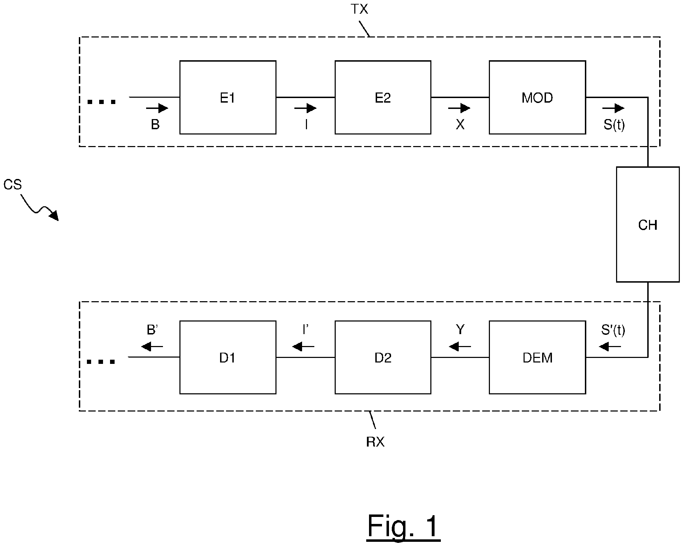

Figure 1 shows a schematic block diagram of a communication system according to an embodiment of the present invention.

The communication system CS comprises a transmitter TX, a channel CH and a receiver RX.

The transmitter TX may be comprised in a first node of an optical communication network (not shown in the drawings), while the receiver RX may be comprised in a second node of the same optical communication network (not shown in the drawings), connected to the first node by the channel CH. The channel CH may be implemented over an optical fiber. The receiver RX is preferably a coherent optical receiver.

The transmitter TX preferably comprises an outer encoding unit E1, an inner encoding unit E2 and a modulator MOD, connected in cascade. The receiver RX in turn preferably comprises a demodulator DEM, an outer decoding unit D1 and an inner decoding unit D2. The output of the demodulator DEM is connected to the input of the inner decoding unit D2 which is connected in cascade to the outer decoding unit D1.

Both the transmitter TX and the receiver RX may comprise other components that are not shown in the drawings, as they are not relevant to the present description.

In operative conditions, the outer encoding unit E1 of the transmitter TX receives a digital data stream B. The data stream B is preferably a stream of digital binary data, i.e. bits. The outer encoding unit E1 preferably encodes the digital data stream B by applying to it an outer error correction code. Preferably, the outer encoding unit E1 encodes the data stream B by applying an outer Forward Error Correction (FEC) code. The outer encoding unit E1 then preferably outputs an outer encoded data stream I of binary data. The outer encoded data stream I is then forwarded to the inner encoding unit E2.

The inner encoding unit E2 preferably receives the outer encoded data stream I and processes it in order to generate an inner encoded data stream X which is able to tolerate a phase slip possibly occurring over the optical transmission channel CH, as it will be described in detail herein after.

Then, the inner encoding unit E2 preferably forwards the inner encoded data stream X to the modulator MOD. The modulator MOD uses the inner encoded data stream X to modulate the phase of an optical carrier signal according to a given digital modulation scheme, in order to generate a modulated optical signal S(t) to be transmitted over the optical transmission channel CH. The modulation scheme may be an M-PSK scheme such as, for instance, the BPSK scheme (M=2) or the QPSK scheme (M=4), or an M-QAM scheme, such as a 16-QAM scheme.

Then, the modulated optical signal S(t) is transmitted over the optical transmission channel CH to the receiver RX. It is assumed that the optical channel CH may be modelled as an Additive White Gaussian Noise (AWGN) channel, i.e. a channel over which the transmitted signal may be subject to linear addition of wideband or white noise with a Gaussian distribution of amplitude. During transmission over the optical transmission channel CH, the modulated optical signal S(t) may be subject to one or more phase slips, as explained above.

At the receiver RX, a modulated optical signal S'(t) possibly affected by phase slips is received by the demodulator DEM. The demodulator DEM demodulates the received modulated optical signal S'(t) by performing a coherent demodulation. In particular, the demodulator DEM estimates the phase of the received modulated optical signal S'(t) and, on the basis of such estimated phase, decides the symbols of the constellation diagram according to the modulation scheme adopted. As a result of a possible phase slip in the recovery of the phase, the decided symbols could be erroneously rotated by a multiple of 360º/K, where K=M for an M-PSK modulation scheme and K=4 for an M-QAM modulation scheme.

This way, the demodulator DEM recovers a digital data stream Y (in the following referred to as "received data stream Y"). The received data stream Y is then forwarded to the inner decoding unit D2 which receives the received data stream Y and processes it in order to recover an inner decoded data stream I' which substantially corresponds to the outer encoded data stream I possibly affected by errors due to phase slips occurring over the optical transmission channel CH and by errors due to noise. As it will be described in detail herein after, the inner decoding unit D2 processes the received data stream Y in such a way so as to reduce at minimum the errors induced by the phase slips possibly occurring over the optical transmission channel CH. Then, the inner decoded data stream I' is forwarded to the outer decoding unit D1, which preferably further decodes the inner decoded data stream I' by applying a decoding algorithm which is suitable for the outer error correction code applied at the transmitter TX by the outer encoding unit E1. The scope of the decoding algorithm applied by the outer decoding unit D1 is to clear residual errors (i.e. errors that have not been corrected by the inner decoding unit D2) affecting the inner decoded data stream I'. This way, the outer decoding unit D2 outputs an outer decoded data stream B' which substantially corresponds to the data stream B. In an embodiment of the present invention the decoding algorithm applied by the outer decoding unit D1 is a decoding algorithm based on a hard decision scheme.

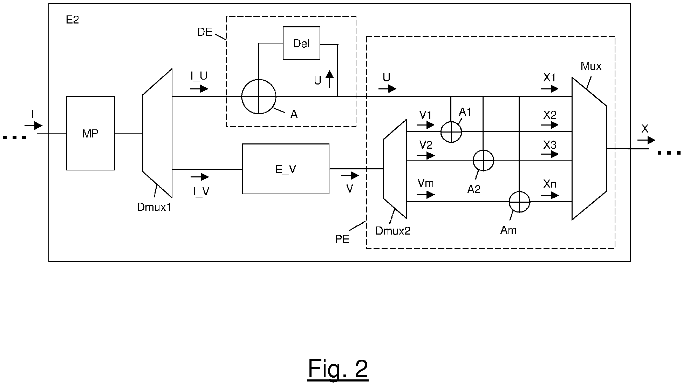

With reference to Figure 2, the inner encoding unit E2 according to a preferred embodiment of the present invention will now be described in detail.

According to this embodiment of the present invention, the inner encoding unit E2 preferably comprises a mapper MP, a demultiplexer Dmux1, a differential encoder DE, a FEC (Forward Error Correction) encoder E_V and a parallel encoder PE.

The mapper MP has preferably one input, which corresponds to the input of the inner encoding unit E2, and one output which is connected to the input of the demultiplexer Dmux1.

The demultiplexer Dmux1 has preferably two outputs. One of the outputs of the demultiplexer Dmux1 is preferably connected to the differential encoder DE and the other output is preferably connected to the FEC encoder E_V.

The differential encoder DE preferably comprises an adder A and a delay element Del. The adder A is preferably a modulo-K adder. For instance, when considering a BPSK modulation scheme, the adder A is a modulo-2 adder. On the contrary, when considering an M-QAM modulation scheme, the adder A is a modulo-4 adder. The adder A has preferably two inputs and one output. The output of the adder A corresponds to the output of the differential encoder DE. One of the inputs of the adder A corresponds to the input of the differential encoder DE while the other corresponds to the output of the delay element Del. The input of the delay element Del is connected to the output of the adder A.

The parallel encoder PE preferably comprises a demultiplexer Dmux2, a number m of adders A1, ..., Am and a multiplexer Mux. The demultiplexer Dmux2 has one input, which is connected to the output of the FEC encoder E_V, and a number m of outputs. Each adder A1, ..., Am has two inputs and one output. One of the inputs of each adder A1, ..., Am is connected to a respective output of the demultiplexer Dmux2. The other input of each adder A1, ..., Am is connected to the output of the adder A of the differential encoder DE. The multiplexer Mux has m+1 inputs and one output. One input of the multiplexer Mux is connected to the output of the adder A. Each of the other m inputs of the multiplexer Mux is connected to the output of a respective adder A1, ..., Am. The output of the multiplexer Mux corresponds to the output of the second encoding unit E2.

According to a first variant of the preferred embodiment of the present invention, the modulation scheme adopted is an M-PSK modulation scheme. For sake of non limiting example, it will be assumed that the modulation scheme adopted is the BPSK scheme (M=2). It is to be noted that this example is non limiting since the operation of the inner encoding unit E2 according to this first variant of the preferred embodiment is the same for any M-PSK modulation scheme.

The outer encoded data stream I at the input of the inner encoding unit E2 is a stream of bits. This outer encoded data stream I is received by the mapper MP. The mapper MP preferably maps the bits of the outer encoded data stream I into logic symbols I_U, I_V, such logic symbols I_U, I_V being integers assuming a value between 0 and M-1. In particular, each logic symbol maps $\log_2(M)$ bits of the binary data stream I. A lookup table may be used which associates every different sequence of $\log_2(M)$ bits to a respective value for the logic symbol I_U, I_V out of the mapper MP. In the example considered above of BPSK modulation scheme, the mapper MP maps the bits of the outer encoded data stream I into integers assuming binary values. Indeed in this case each bit of the outer encoded data stream I is mapped into a corresponding binary value.

Then, the symbols I_U, I_V at the output of the mapper MP are forwarded to the demultiplexer Dmux2. The demultiplexer Dmux2 preferably splits the symbols I_U, I_V received from the mapper MP between the differential encoder DE and the FEC encoder E_V.

The FEC encoder E_V is preferably configured to apply a FEC code, which in the following will be referred to as FEC(V) code. This code is preferably a block linear systematic FEC code. More preferably, the FEC code is an LDPC (Low Density Parity Check) code having parity check matrix $H_v$ and generator matrix $G_v$. In particular, this code may be a known IRA (Irregular Repeat and Accumulate) code whose implementation relies on the method proposed in "Y. Zhang and W. Ryan, 'Structured IRA codes: performance analysis and construction,' IEEE Trans. On Comm., vol. 55, no. 5, pp. 837-844, May 2007".

The FEC code applied by the FEC encoder E_V maps an input block of $K_v$ logic symbols I_V into a corresponding output block of $N_v > K_v$ FEC(V) encoded logic symbols. As the FEC(V) code is systematic, in the output block of FEC(V) encoded symbols, the first $K_v$ symbols are the symbols of the input block and the remaining appended $N_v - K_v$ symbols are parity-check symbols. Preferably, $K_v$ and $N_v$ are integer numbers.

The demultiplexer Dmux2 forwards groups of $N_v/m$ symbols I_U to the differential encoder DE and corresponding blocks of $K_v$ symbols I_V to the FEC encoder E_V. In the example considered above of BPSK modulation, the demultiplexer Dmux2 processes $K_v + N_v/m$ bits at a time and forwards $N_v/m$ bits to the differential encoder DE and the other $K_v$ bits to the FEC encoder E_V.

Then, the differential encoder DE receives the logic symbols I_U and preferably differentially encodes the symbols I_U. In particular, each time one logic symbol I_U is forwarded to the differential encoder DE, the adder A computes a differentially encoded logic symbol U according to the following equation:

$$U(i)=U(i-1)+I\_U(i) \qquad\qquad [3]$$

wherein "+" indicates modulo-M addition and index i is an incremental index. According to the equation above, the current differentially encoded symbol U(i) output by the adder A results from the modulo-M addition of the current logic symbol I_U(i) out of the current block of logic symbols I_U, I_V and the differentially encoded symbol U(i-1) previously computed. Then, each differentially encoded logic symbol U is forwarded to the parallel encoder PE.

In parallel, the FEC encoder FEC_V receives the $K_v$ logic symbols I_V and preferably encodes such symbols.

The operation performed by applying code FEC(V) may be represented by the following matrix equation:

$$G_V \cdot [I\_V] = [V] \qquad\qquad [4]$$

wherein $G_v$ is the generator matrix of the FEC(V) code, [I_V] is a column vector of $K_v$ logic symbols I_V and [V] is column vector of resulting FEC(V) encoded logic symbols V. The code will not be described in further detail as it is not relevant for the present description.

The FEC encoder E_V then, for each block of $K_v$ symbols I_V, generates a sequence of $N_v$ FEC(V) encoded logic symbols V and forwards them to the parallel encoder PE. In particular, a sequence of m FEC(V) encoded symbols V1, ..., Vm is generated in parallel with respect to each differentially encoded symbol U. Preferably, m is an integer submultiple of Nv.

Then, the parallel encoder PE preferably receives both the differentially encoded symbols U and the FEC(V) encoded symbols V. For each sequence of m FEC(V) encoded symbols V1, ..., Vm (also referred to in the following as "m-tuple" of FEC encoded symbols V1, ..., Vm) generated in parallel with a respective differentially encoded symbol U, the parallel encoder PE preferably computes a sequence of n inner encoded symbols X1, ..., Xn according to the following equations:

$$X1=U \qquad\qquad [5a]$$
$$X2=U+V1 \qquad\qquad [5b]$$
$$\text{.......}$$
$$Xn=U+Vm \qquad\qquad [5c]$$

wherein "+" indicates modulo-M addition. Adders A1, ..., Am preferably computes the symbols X2, ..., Xn respectively by modulo-M adding the differentially encoded symbol U to each FEC(V) encoded symbol V out of the m-tuple of FEC(V) encoded symbols V1, ..., Vm. The computations performed by the adders A1, ..., Am are performed in parallel. Therefore, a sequence of n inner encoded symbols X1, ..., Xn (also referred to as an n-tuple of inner encoded symbols X1, ..., Xn) is generated which is then forwarded to the multiplexer Mux. The multiplexer Mux concatenates the inner encoded symbols X1, ..., Xn in a single data stream of inner encoded symbols X prior to their transmission to the modulator MOD of the transmitter TX.

As can be noticed from the operations described above, the inner encoding unit E2 applies to the differentially encoded symbols U and to the logic symbols I_V an equivalent error correction code for obtaining the inner encoded symbols X, such equivalent code being obtained by combining the code FEC(V) applied by the FEC encoder E_V with the equations [5a]-[5c]. The equivalent code will be referred to in the following as code FEC(X). In case the code FEC(V) applied to compute the symbols V is an LDPC code having the parity check matrix $H_v$ described above, the equivalent code is also an LDPC code having an equivalent parity check matrix $H_x$. Indeed, as the LDPC code for the symbols V is a linear code and the operations performed by the adders A1, ..., Am are also linear, symbols X turn out to be encoded by an equivalent LDPC code having a parity matrix $H_x$ obtained by combining the parity check matrix $H_v$ with the equations [5a]-[5c] reported above.

The operation of the equivalent code applied by the inner encoding unit E2 to the logic symbols I_V and the differentially encoded symbols U may be represented by the following matrix equation:

$$G_X \cdot \left[ \frac{U}{I\_V} \right] = [X] \qquad\qquad [6]$$

wherein:

$\left[ \dfrac{U}{I\_V} \right]$ is a column vector of length Nv/m+Kv comprising Nv/m differentially encoded symbols U and a block of $K_v$ logic symbols I_V;

[X] is a column vector of length $N_v + N_v/m$ comprising $N_v + N_v/m$ inner encoded symbols X resulting from the processing of a block of $K_v$ logic symbols I_V and $N_v/m$ differentially encoded symbols U (it turns out from the above that, since one differentially encoded symbol U is added by the parallel encoder PE to each symbol of a sequence of m FEC(V) encoded symbols V, the number of differentially encoded symbols U needed for every block of $K_v$ logic symbols I_V is $N_v/m$); and

$G_x$ is the generator matrix of the equivalent code, which may be derived from the generator matrix $G_v$ according to the following equation:

$$G_X = \left[ \begin{array}{cc} I_X & 0_X \\ A_X & G_V \end{array} \right| \quad \qquad [7]$$

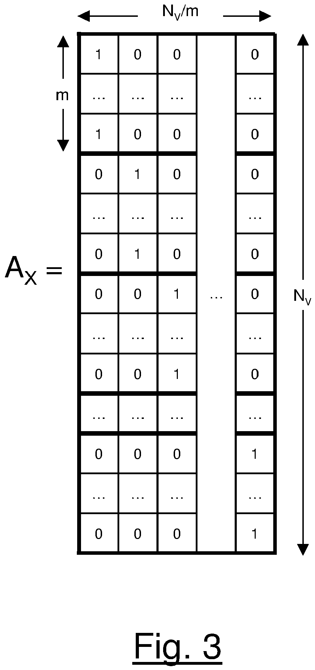

wherein $I_x$ is an identity matrix of dimensions $N_v/m \times N_v/m$, $O_x$ is a zeros matrix of dimensions $N_v/m \times K_v$ and $A_x$ is a matrix of dimensions $N_v \times Nv/m$ having the form shown in Figure 3.

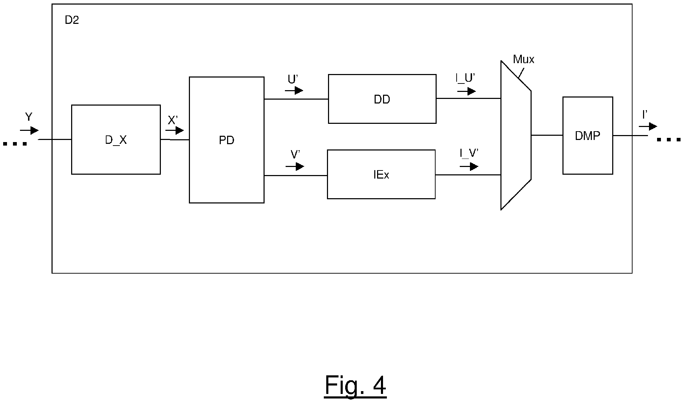

Figure 4a shows an exemplary sequence of logic symbols I_U in case BPSK modulation is considered. Figure 4b shows the differentially encoded symbols U generated by the differential encoder DE starting from the sequence of logic symbols I_U of Figure 4a, and an exemplary sequence of FEC(V) encoded symbols V. Figure 4c shows the inner encoded symbols X resulting from the modulo-2 sum of the differentially encoded symbols U and the FEC(V) encoded symbols V of Figure 4b. In this case indeed, each symbol may assume the binary value 0 or 1. On the horizontal axis is reported an incremental index i indicative of the differentially encoded symbols U. On the vertical axis it is reported the value of each symbol. It is assumed that m=2, i.e. that two FEC(V) encoded symbols V are considered for each differentially encoded symbol U. A number of four differentially encoded symbols is considered. In order to generate the inner encoded symbols X of Figure 4c, the equations [5a]-[5c] are applied to each differentially encoded symbol U of Figure 4b and to the corresponding two FEC(V) encoded symbols V.

Referring back to Figure 1, at the output of the inner encoding unit E2, the symbols X are forwarded to the modulator MOD which maps each logic symbol X into a respective M-PSK modulated symbol, i.e. a respective discrete value of the phase of the M-PSK modulated optical signal to be transmitted. In particular, each different logic symbol X is mapped into a corresponding value out of the M different values of the phase of the signal, such different values being angularly spaced by 360º/M. In the exemplary case of BPSK modulation, symbols X may assume a binary value; in this case, symbol 0 may be mapped into the phase value of 0º while symbol 1 may be mapped into the phase value of 180º.

With reference to Figure 4, the inner decoding unit D2 according to the preferred embodiment of the present invention will now be described in detail.

According to this embodiment of the present invention, the inner decoding unit D2 preferably comprises a FEC decoder D_X, a parallel decoder PD, a differential decoder DD, an information extractor IEx, a multiplexer Mux and a de-mapper DMP.

The FEC decoder D_X has preferably one input, which corresponds to the input of the inner decoding unit D2, and one output which is connected to the input of the parallel decoder PD.

The parallel decoder PD has preferably two outputs, one connected to the differential decoder DD and the other connected to the information extractor IEx. The output of the differential decoder DD and the output of the information extractor IEx are both connected to a respective input of the multiplexer Mux, whose output is connected to the de-mapper DMP. The output of the de-mapper corresponds to the output of the inner decoding unit D2.

In operative conditions, the demodulator DEM of the receiver RX receives the signal S'(t) over the channel CH. In the considered case of M-PSK modulation, the demodulator DEM demodulates the signal S'(t) by de-mapping the value of its phase (i.e. the M-PSK modulated symbol) into corresponding logic symbols Y. This way, a data stream of received logic symbols Y is recovered from the optical signal S'(t). The data stream of received logic symbols Y may be subject to the effects of one or more possible phase slips. If at least one phase slip occurs over the channel CH, one or more of the received logic symbols Y may be incorrect, as explained above. Besides, the data stream of received logic symbols Y may be subject to other errors possibly due to e.g. noise over the channel CH and the like.

The data stream of received logic symbols Y is then forwarded to the inner decoding unit D2 and, in particular, to the FEC decoder D_X. The FEC decoder D_X preferably decodes the received logic symbols Y by applying a decoding algorithm which is suitable for decoding the equivalent code FEC(X) applied in the parallel encoder PE of the second encoding unit E2 at the transmitter TX. In particular, the decoding algorithm applied by the FEC decoder D_X decodes the equivalent code FEC(X) which has the parity check matrix $H_x$ and the generator matrix $G_x$ described above and recovers a sequence of FEC(X) decoded logic symbols X' which substantially correspond to the inner encoded logic symbols X at the transmitter TX side but may be affected by errors due to possible phase slips, as it will be explained herein after. In particular, in case the code FEC(V) applied to logic symbols I_V is the FEC encoder E_V is an LDPC code, the decoding algorithm applied by FEC decoder D_X may be a soft iterative decoding algorithm, and in particular it may be the known soft iterative decoding algorithm whose implementation relies on the method proposed in "C. R. Hartmann and L. D. Rudolph, 'An optimum symbol-by-symbol decoding rule for linear codes,' IEEE Trans. Info Theory, pp. 514-517, September 1976". This decoding algorithm will not be described in further detail since it is not relevant for the present invention.

The FEC decoder D_X then outputs the sequence of FEC(X) decoded logic symbols X'.

At the output of the FEC decoder D_X, each sequence of n logic symbols X1', ..., Xn' is forwarded to the parallel decoder PD. The parallel decoder PD preferably receives the n logic symbols X1', ..., Xn' and computes one parallel decoded logic symbol U' and m=n-1 parallel decoded logic symbols V1', ..., Vm' by applying the following equations, which are the inverse of equations [5a]-[5c]:

$$U'=X1' \qquad\qquad [8a]$$

$$V1'=X2'-U' \qquad\qquad [8b]$$

$$.......$$

$$Vm'=Xn'-U' \qquad\qquad [8c]$$

wherein symbol "-" indicates modulo-M subtraction. The parallel decoded logic symbols V' and U' substantially correspond to the FEC(V) encoded symbols V and to the differentially encoded symbols U, respectively, and they are also possibly affected by errors, as it will be described in greater detail herein after. Indeed, as it will become clearer in the following, possible errors in the parallel decoded symbols V' may have been corrected after processing of symbols X' by the FEC decoder D_X.

Then, the logic symbols U' are forwarded to the differential decoder DD which decodes them and computes differentially decoded logic symbols I_U' by applying the following equation:

$$I\_U'(i)=U'(i)-U'(i-1) \qquad\qquad [9]$$

wherein symbol "-" indicates modulo-M subtraction and index i is an incremental index. The differentially decoded logic symbols I_U' substantially correspond to the logic symbols I_U and are possibly affected by errors, as explained in the following.

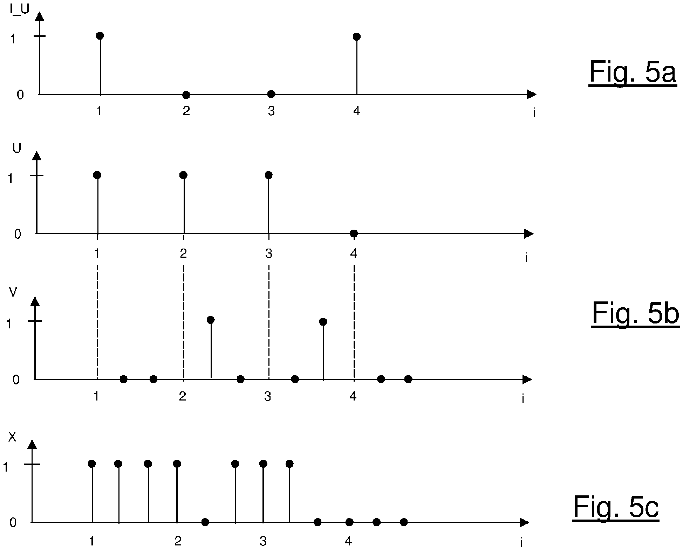

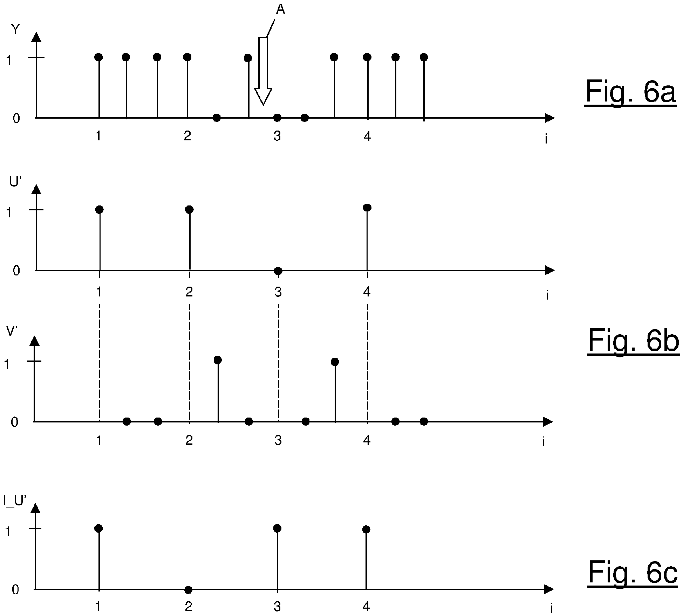

Figure 5a shows a sequence of received logic symbols Y in case BPSK modulation is considered, for the exemplary situation already considered in Figures 4a, 4b and 4c. In particular, four n-tuples of received logic symbols Y are considered. Figure 5b shows symbols U' and the symbols V' recovered at the output of the parallel decoder PD (it is to be noticed that in this exemplary situation it is assumed that possible errors affecting symbols V' due to e.g. noise over the channel CH are actually corrected by the FEC decoder D_X; indeed, as explained above, considering for example an LDPC code as the FEC(V) code, the FEC decoder D_X implements a decoding algorithm taking into account the parity checks for the LDPC code FEC(V)). Figure 5c shows the logic symbols I_U' computed by the differential decoder DD according to equation [6]. It is assumed in Figure 5a that the sequence of symbols Y is affected by some errors due to a phase slip, which event is represented by the arrow indicated by letter "A ". In particular, as can be seen by comparing the sequence of Figure 5a with the sequence of transmitted symbols X of Figure 4c, it is assumed that a phase slip occurred which caused all the received symbols Y of the third n-tuple and the fourth n-tuple to be inverted with respect to the transmitted ones. Therefore, the phase slip affects two entire n-tuples of bits, where n=3 in this example. As can be seen in Figure 5b, the phase slip causes the symbols U' belonging to the third and the fourth n-tuples to be incorrectly recovered by the parallel decoder DD, while all the symbols V' are correctly recovered, i.e. they are equal to the symbols V at the transmitter TX side. As can be seen in Figure 5c, by differentially demodulating symbols U', one error still remains for the symbol I_U' at the beginning of the n-tuple affected by the phase slip within the sequence of received symbols, i.e. at the beginning of the third n-tuple in this case. As already mentioned above, this residual error on symbol I_U' may be corrected at the outer decoding unit D1. Figures 6a, 6b and 6c show another exemplary situation in which a phase slip (represented by the arrow marked by letter " A' ") occurs which affects the last symbol of the second n-tuple of received logic symbols Y and the entire third and fourth n-tuples of received logic symbols Y. Therefore, in this case, the phase slip occurs within an n-tuple of bits, i.e. the second one. As can be seen from Figure 6b, the phase slip causes the symbols U' belonging to the third and the fourth n-tuples (i.e. of the n-tuples entirely affected by the phase slip) to be incorrectly recovered by the parallel decoder PD. Moreover in this case, also symbols V' inside the n-tuple within which the phase slip occurs would be incorrect. Actually, also the errors on symbols V' due to a phase slip may be corrected when received logic symbols Y are processed by the FEC decoder D_X which decodes the equivalent FEC(X) code.

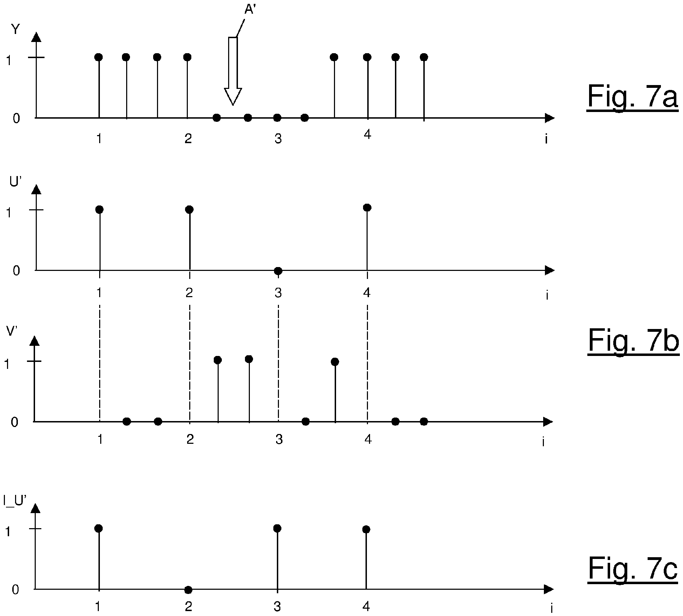

The present invention allows to efficiently encode/decode a data stream for any M-PSK modulation scheme with coherent demodulation. Advantageously, as can be seen from Figures 5a, 5b, 5c and 6a, 6b, 6c, logic symbols V' are substantially unaffected by possible phase slips occurring at the beginning of an n-tuple of received logic symbols Y. Indeed, such a phase slip affects only the logic symbol U' of the n-tuple. Prior to transmission, any symbol within a sequence of m symbols V is added to the same symbol U. Since, with high probability, all the symbols within each n-tuple of symbols X experiences the same phase slip, the symbol U' represents a reliable phase reference which may be advantageously subtracted from symbols V' in order to remove their phase ambiguity due to a phase slip. Indeed, in case of LDPC codes, the symbol U' participate (negated) to any parity check equation involving the corresponding sequence of m symbols V'. Therefore, any phase slip affecting an entire n-tuple of received symbols Y has no effect on parity checks. On the contrary, as can be seen from Figures 7a, 7b, 7c, a phase slip occurring within an n-tuple of received logic symbols Y affects also the symbols V' inside the n-tuple. As the symbols V' are FEC encoded, such errors may be advantageously corrected by the decoding algorithm implemented within the inner decoding unit D2. Indeed, the outer code applied at the outer encoding unit E1 and decoded at the outer decoding unit D1 advantageously corrects the residual errors on the symbols I_U' due to possible phase slips but it may not be necessary to correct residual errors on symbols I_V' as these errors may be cleared by decoding the code FEC(X), as explained above. Indeed, if the code FEC(X) is capable of reaching a target BER floor, e.g. equal to about $1\times10^{-15}$, the outer code turns out to be not necessary for the symbols I_V.

In parallel to the differential decoding of symbols U' performed by the differential decoder DD, the logic symbols V' are forwarded to the information extractor IEx which extracts from the sequence of symbols V' FEC(V) decoded logic symbols I_V'. In case the code applied by the FEC encoder FEC_V is a linear systematic FEC code, symbols I_V' are recovered from symbols V' by eliminating redundant symbols (i.e. the parity check symbols). The FEC(V) decoded logic symbols I_V' substantially correspond to the logic symbols I_V at the transmitter TX side.

Then, logic symbols I_U' and I_V' are forwarded to the multiplexer Mux which concatenates them in a single data stream and forwards them to the de-mapper DMP. The de-mapper DMP finally converts the symbols I_U' and I_V' into bits of the inner decoded data stream I'. The operation of the de-mapper DMP is the inverse operation with respect to the operation of the mapper MP described above. In particular, each symbol I_U', I_V' is converted into $\log_2(M)$ bits. A lookup table may be used to perform such operation.

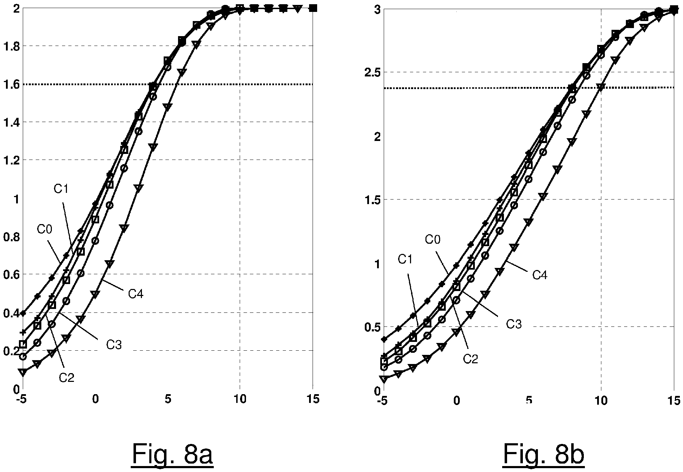

Figures 8a and 8b shows graphs representing the number of error-free bits per symbol (or "capacity") transmitted over the channel CH as a function of the signal to noise ratio (SNR) in dB units, when 4-PSK (Fig. 8a) and 8-PSK (Fig. 8b) modulation schemes are considered. The curve indicated by reference C0 shows the capacity for a channel CH when coherent detection is used without implementing any differential encoding/decoding technique. The curves indicated by references C1, C2, C3 are obtained by implementing the present invention (with n=4, n=3, n=2, respectively), while curve indicated by reference C4 is obtained by implementing the known differential encoding/decoding technique only. As can be seen from the graphs, the present invention allows to reduce the SNR penalty. Indeed, in case of 4-PSK modulation, at a capacity of about 1.6 bits/symbol, the present invention allows to reduce the required SNR of about 1.5 dB when n=3, 4 and of about 1.2 dB when n=2 with respect to known differential encoding/decoding. Indeed, in case of 8-PSK modulation, at a capacity of about 2.4 bits/symbol, the present invention allows to reduce the required SNR of about 1.8 dB when n=3, 4 and of about 1.4 dB when n=2 with respect to known differential encoding/decoding.

A second variant of the preferred embodiment of the present invention involves using an M-QAM modulation scheme.

According to this second variant, in the transmitter TX, the mapper MP preferably maps the bits of the encoded data stream I into logic symbols I_U, I_V, such logic symbols I_U, I_V being integers assuming a value between 0 and K-1, where K=4 for any M-QAM modulation scheme. Therefore, logic symbols I_U, I_V may assume one of the values 0, 1, 2, 3. Each logic symbol maps $\log_2(K)$ bits of the binary data stream I. Then, the logic symbols I_U, I_V are processed and inner encoded logic symbols X are computed in the same manner as described above with reference to the first variant.

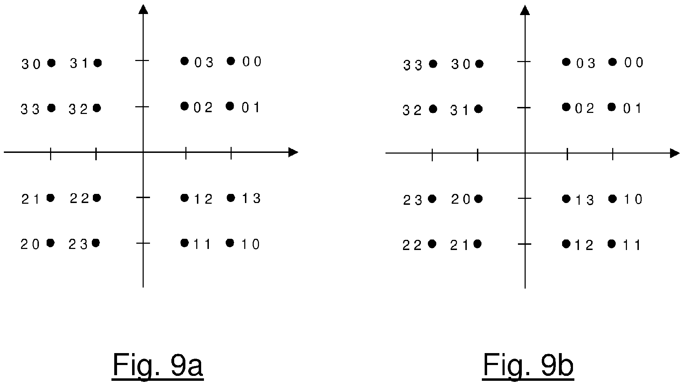

Then, inner encoded logic symbols X are forwarded to the modulator MOD. The modulator MOD, according to this second variant, maps $\log_4(M)$ logic symbols X into a respective M-QAM modulated symbol, i.e. a respective discrete amplitude-discrete phase pair of the M-QAM modulated optical signal to be transmitted. As explained above, any pair of discrete amplitude-discrete phase of the signal represents a point of the constellation diagram of the M-QAM modulation scheme. For instance, in case of 16-QAM modulation, the modulator MOD maps two logic symbols X (which will be referred to in the following as "most significant symbol MSS" and least significant symbol LSS") into a respective 16-QAM modulated symbol, i.e. a respective point of the 16-QAM constellation diagram. Different mappings are possible. Two examples of possible mappings are shown in Figures 9a and 9b in which the points of the 16-QAM constellation diagram are shown and are labelled with two integers representing the most significant symbol MSS and the least significant symbol LSS. In both the cases shown in Figures 9a and 9b, the most significant symbol MSS is representative of the quadrant of the constellation diagram to which the corresponding 16-QAM symbol belongs, while the least significant symbol LSS varies inside each quadrant. For the case of Figure 9a, it is to be noticed that the most significant symbols MSS rotate with the axes, while the least significant symbols LSS are invariant to phase rotations (i.e. they are invariant to possible phase slips). For the case of Figure 9b, both the most significant symbols MSS and the least significant symbols LSS rotate with the axes.

Moreover, symbols X of two adjacent n-tuples may be interleaved at the output of the inner encoding unit E2 so that pairs of symbols of the same n-tuple may be mapped on the same M-QAM modulated symbol at the output of the modulator MOD or they may be mapped on adjacent M-QAM modulated symbols at the output of the modulator MOD. The operation of interleaving the logic symbols X belonging to two n-tuples may be performed by an interleaver interposed between the inner encoding unit E2 and the modulator MOD.

At the receiver RX, the demodulator DEM demodulates the signal S(t) by demapping the M-QAM modulated symbols into corresponding received logic symbols Y. In particular, each n-tuple of received logic symbols Y is recovered by demapping adjacent M-QAM modulated symbols and then performing the inverse operation with respect to the interleaving operation described above. Then, the received logic symbols Y are processed and the encoded data stream I' is recovered in the same manner as described above with reference to the first variant of the preferred embodiment of the present invention.

In view of the above, the present invention allows to efficiently encode/decode a data stream for any M-QAM modulation scheme with coherent demodulation. Indeed, the fundamental features of the method of encoding/decoding the data when an M-QAM modulation is considered are the same as when an M-PSK modulation is taken into account. Therefore, also in this case, the method of the present invention allows to correct most of the errors induced by a phase slip and to reduce the SNR penalty.

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventors to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

The functions of the various elements shown in the Figures 1, 2 and 4, including any functional blocks labelled as "device", "unit", "block" or "processing unit", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the terms "processing unit", "device", "block" or "unit" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included. It should be appreciated by those skilled in the art that any block diagrams herein represent conceptual views of illustrative circuitry embodying the principles of the invention.

**Claims**

1. A method for encoding a binary data stream (B) for transmission of said data over an optical transmission channel (CH) employing a digital modulation scheme using a number K of different phases, the method comprising:

   a) converting said binary data stream (B) into a sequence of logic symbols (I_U, I_V), said logic symbols (I_U, I_V) being represented by respective values out of a set of K integer values;
   b) splitting said sequence of logic symbols (I_U, I_V) into a first subsequence of first logic symbols (I_U) and a second subsequence of second logic symbols (I_V);
   c) differentially encoding said first logic symbols (I_U) to derive differentially encoded logic symbols (U);
   d) applying a forward error correction code to said second logic symbols (I_V) to derive adjacent blocks of symbols comprising a number m of FEC encoded logic symbols (V); and
   e) generating a stream of encoded logic symbols (X) by combining each of the m FEC encoded logic symbols (V) of one of said blocks of symbols and a respective one of said differentially encoded logic symbols (U).

2. The method according to claim 1, wherein at said step e) said combining comprises performing a modulo-K addition of said each of the m FEC encoded logic symbols (V) and said respective one of said differentially encoded logic symbols (U).

3. The method according to any of claims 1 or 2, wherein said error correction code applied at said step d) to said second logic symbols (I_V) is a linear systematic block code.

4. The method according to claim 3, wherein said error correction code is an LDPC (Low Density Parity Check) code.

5. The method according to any of the preceding claims, wherein it further comprises, before said step a), applying to said binary data stream (B) an outer forward error correction code.

6. The method according to any of the preceding claims, wherein at said step a) said converting comprises associating groups of $\log_2(K)$ bits of said binary data stream (B) to respective values of said logic symbols (I_U, I_V) by means of a lookup table.

7. A method for decoding a stream of encoded logic symbols (Y), said method comprising:

   a') applying a forward error correction decoding algorithm to said stream of encoded logic symbols (Y) to derive a block of a number m+1 of FEC decoded logic symbols (X');
   b') recovering, from said block of FEC decoded logic symbols (X'), one first FEC decoded logic symbol (U') and a respective block of a number m of second FEC decoded logic symbols (V');
   c') differentially decoding said first FEC decoded logic symbol (U') to derive a first logic symbol (I_U');

d') processing said block of second FEC decoded logic symbols (V') for extracting second logic symbols (I_V'); and

e') concatenating said first logic symbol (I_U') and said second logic symbols (I_V') into a single sequence of logic symbols (I_U', I_V') and converting said logic symbols (I_U', I_V') into binary data (B').

8. The method according to claim 7, wherein at said step a') said forward error correction decoding algorithm is a soft iterative decoding algorithm.

9. The method according to any of claims 7 or 8, wherein at said step b') said recovering comprises performing a modulo-K subtraction of said first FEC decoded logic symbol (U') from said block of FEC decoded logic symbols (X').

10. The method according to any of claims 7 to 9, wherein at said step d') said processing comprises eliminating parity-check symbols from said second FEC decoded logic symbols (V).

11. An encoding unit (E2) for a transmitter (TX) of a node of an optical communication network, said encoding unit (E2) comprising:

- a mapper (MP) which converts a binary data stream (B) into a sequence of logic symbols (I), said logic symbols (I) being represented by respective values out of a set of K integer values;
- a demultiplexer (Dmux1) which splits said sequence of logic symbols (I) into a first subsequence of fist logic symbols (I_U) and a second subsequence of second logic symbols (I_V);
- a differential encoder (DE) which differentially encodes said first logic symbols (I_U) to derive differentially encoded logic symbols (U);
- a FEC encoder (E_V) which applies a forward error correction code to said second logic symbols (I_V) to derive adjacent blocks of symbols comprising a number m of FEC encoded logic symbols (V); and
- an encoding module (PE) which generates a stream of encoded logic symbols (X) by combining each of the m FEC encoded logic symbols (V) of one of said blocks of symbols and a respective one of said differentially encoded logic symbols (U).

12. The encoding unit (E2) according to claim 11, wherein said encoding module (PE) comprises a number m of adders (A1, ..., Am) each configured to perform a modulo-K addition of said each of the m FEC encoded logic symbols (V) to said respective one of said differentially encoded logic symbols (U).

13. A node for an optical communication network, said node comprising a transmitter (TX) comprising an encoding unit (E2) according to claim 11 or 12 and a modulator (MOD), wherein said modulator (MOD) is configured to map encoded logic symbols (X) into corresponding modulated symbols of a digital modulation scheme, and to associate said modulated symbols to a number K of different phases of an optical carrier signal so as to generate a modulated optical signal (S(t)), and wherein said node is configured to transmit said modulated optical signal (S(t)) over an optical transmission channel (CH).

14. The node according to claim 13, wherein said transmitter (TX) further comprises an outer encoding unit (E1) which is configured to apply an outer forward error correction code to said binary data stream (B).

15. A decoding unit (D2) for a receiver (RX) of a node of an optical communication network, said decoding unit (D2) comprising:

- a FEC decoder (D_X) which applies a forward error correction decoding algorithm to a stream of encoded logic symbols (Y) to derive a block of a number m+1 of FEC decoded logic symbols (X');
- a decoding module (PD) which recovers, from said block of FEC decoded logic symbols (X'), one first FEC decoded logic symbol (U') and a respective block of a number m of second FEC decoded logic symbols (V');
- a differential decoder (DE) which differentially decodes said first FEC decoded logic symbol (U') to derive a first logic symbol (I_U'); and
- an information extraction module (IEx) which processes said block of m second FEC decoded logic symbols (V') for extracting second logic symbols (I_V');
- a multiplexer (Mux) which concatenates said first logic symbols (I_U') and said second logic symbols (I_V') into a single sequence of logic symbols (I_U', I_V'); and
- a de-mapper (DMP) which converts said logic symbols (I_U', I_V') into binary data (B').

**16.** The decoding unit (D2) according to claim 15, wherein said decoding module (PD) is further configured to perform a modulo-K subtraction of said one first FEC decoded logic symbol (U') from said block of FEC decoded logic symbols (X').

**17.** A node for an optical communication network, said node comprising a receiver (RX) comprising a demodulator (DEM) and a decoding unit (D2), said receiver (RX) being configured to receive an optical signal (S'(t)), said received optical signal (S'(t)) having a number K of different phases associated to modulated symbols of a digital modulation scheme, wherein said demodulator (DEM) is configured to de-map said modulated symbols into corresponding encoded logic symbols (Y), and wherein said decoding unit (D2) is according to claim 15 or 16.

## Fig. 1

## Fig. 2

$$A_X =$$

## Fig. 3

Fig. 4

Fig. 5a

Fig. 5b

Fig. 5c

A

Y

1

0

1    2    3    4    i

<u>Fig. 6a</u>

U'

1

0

1    2    3    4    i

V'

1

0

1    2    3    4    i

<u>Fig. 6b</u>

I_U'

1

0

1    2    3    4    i

<u>Fig. 6c</u>

Fig. 7a

Fig. 7b

Fig. 7c

Fig. 8a

Fig. 8b

### Fig. 9a

### Fig. 9b

Europäisches
Patentamt
European
Patent Office
Office européen
des brevets

**EUROPEAN SEARCH REPORT**

Application Number

EP 12 30 5188

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 6 097 764 A (MCCALLISTER RONALD D [US] ET AL) 1 August 2000 (2000-08-01)<br>* figure 3 *<br>* column 5, lines 11-16,43-47,57,58 *<br>* column 6, lines 28-40, 53, 54 *<br>* column 7, lines 16-57 *<br>----- | 1,3-5, 11,14 | INV.<br>H04L1/00 |
| X | US 5 878 085 A (MCCALLISTER RONALD D [US] ET AL) 2 March 1999 (1999-03-02)<br>* figures 1,2 *<br>* column 3, lines 53-58 *<br>* column 4, lines 31-35, 53-67 *<br>* column 5, lines 18-20,32-36 *<br>* column 6, lines 51-62 *<br>----- | 1,3-5, 11,14 | |
| X | US 5 995 551 A (MCCALLISTER RONALD D [US] ET AL) 30 November 1999 (1999-11-30)<br>* figures 1,2 *<br>* abstract *<br>* column 3, lines 44-49 *<br>* column 4, lines 15-30,48-61 *<br>* column 5, lines 27-38, 51-57 *<br>* column 6, lines 1,2 *<br>----- | 1,3-5, 11,14 | TECHNICAL FIELDS SEARCHED (IPC)<br><br>H04L |

The present search report has been drawn up for all claims

| Place of search | Date of completion of the search | Examiner |
|---|---|---|
| The Hague | 29 May 2012 | Marjanovic, Djordje |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

**ANNEX TO THE EUROPEAN SEARCH REPORT
ON EUROPEAN PATENT APPLICATION NO.**

EP 12 30 5188

This annex lists the patent family members relating to the patent documents cited in the above-mentioned European search report.
The members are as contained in the European Patent Office EDP file on
The European Patent Office is in no way liable for these particulars which are merely given for the purpose of information.

29-05-2012

| Patent document cited in search report | | Publication date | Patent family member(s) | | Publication date |
|---|---|---|---|---|---|
| US 6097764 | A | 01-08-2000 | AU<br>US<br>US<br>WO | 1921599 A<br>6005897 A<br>6097764 A<br>9931808 A1 | 05-07-1999<br>21-12-1999<br>01-08-2000<br>24-06-1999 |
| US 5878085 | A | 02-03-1999 | AU<br>US<br>WO | 8903398 A<br>5878085 A<br>9909720 A1 | 08-03-1999<br>02-03-1999<br>25-02-1999 |
| US 5995551 | A | 30-11-1999 | AU<br>US<br>WO | 8778798 A<br>5995551 A<br>9909722 A1 | 08-03-1999<br>30-11-1999<br>25-02-1999 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **Y. ZHANG ; W. RYAN.** Structured IRA codes: performance analysis and construction. *IEEE Trans. On Comm.,* May 2007, vol. 55 (5), 837-844

- **C. R. HARTMANN ; L. D. RUDOLPH.** An optimum symbol-by-symbol decoding rule for linear codes. *IEEE Trans. Info Theory,* September 1976, 514-517